# EUROPEAN PATENT APPLICATION

(11) **EP 2 319 324 A1**
(43) Date of publication of application: **11.05.2011**
(21) Application number: 09175292.3
(22) Date of filing: 06.11.2009
(51) Int. Cl.: A21C 9/04, A21C 9/08, A21C 15/00, A21D 13/00

(54) **Method for providing a layer of foodstuff on a base**

(71) Applicant: Tech-Nikkels BV, 7451 PS Holten (NL)
(72) Inventor: Nikkels, Henk, 7437 XE, Bathmen (NL)
(74) Representative: 't Jong, Bastiaan Jacob

(57) **Abstract**

The invention relates to a method for providing a layer of foodstuff on a base, which method comprises the steps of:
- providing a base;
- arranging a portion of foodstuff on top of the base;
- arranging a flexible layer over the portion of foodstuff and over the base; and
- applying pressure on the flexible layer to spread the portion of foodstuff over the base.

The invention also relates to a device for performing the method

## Description

The invention relates to a method for providing a layer of foodstuff on a base.

In the field of the food industry it is known to automate the production of foodstuff. For example pizza's are made, at least partially, in an automated way. A layer of dough is provided from which circular pizza bottoms are cut. Then a sauce, like tomato sauce is dispensed on top of the pizza bottom and spread over the bottom with a skimmer or similar tool. This skimmer provides an evenly distributed layer of tomato sauce on the pizza bottom.

However, in case the sauce is inhomogeneous a skimmer cannot provide an evenly distributed layer. For example, when the sauce comprises larger chunks, like minced meat, the skimmer will take along all the chunks and leave a layer of sauce without the chunks.

Turkish pizza's comprise a dough base with a sauce of tomato, minced meat and vegetables on top of the dough base. In commercial production, this inhomogeneous sauce is spread over the dough base by hand, as no mechanical means are available. The spreading of this sauce, which typically has a temperature of just above freezing point, is monotonous and unpleasant work for the people.

In other fields of the food industry similar problems exists. For example in the field of prepackaged sandwiches, each sandwich has to be made by hand, as a sandwich generally contains a inhomogeneous, which cannot be arranged mechanically.

Using any tool to try to mechanize the application of an inhomogeneous mass onto a bottom often results in part of the food mass sticking to the tool. Any food mass sticking to the tool is undesired as this could result in pollution of other following products.

Accordingly it is an object of the invention to provide a method for providing a layer of foodstuff on a base, which prevents at least partially the above mentioned disadvantages.

This object is achieved by the method according to the invention, which method comprises the steps of:
- providing a base;
- arranging a portion of foodstuff on top of the base;
- arranging a flexible layer over the portion of foodstuff and over the base; and
- applying pressure on the flexible layer to spread the portion of foodstuff over the base.

The use of a flexible layer between the portion of foodstuff and the application of pressure, ensures that any foodstuff only sticks to the flexible layer, while the tools or hand for applying pressure remain clean.

The flexible layer further provides for a more equal distribution of pressure on the portion of foodstuff, such that it is distributed evenly over the base.

With this method according to the invention it is possible to mechanize the application of an inhomogeneous food mass onto a base of any shape, like a round or square base.

An embodiment of the method according to the invention comprises the step of removing the flexible layer after applying the pressure on the layer. It is preferred that the flexible is made of a material which reduces the adhesion of foodstuff to the flexible layer. Suitable materials are HDPE and LDPE.

In a preferred embodiment of the method according to the invention a number of portions of foodstuff is arranged evenly distributed on top of the base. By arranging the foodstuff in several portion over the base, it is easier to provide an evenly distributed layer of foodstuff by applying pressure.

In another embodiment of the method according to the invention the pressure is applied from the center of the portion of foodstuff to the border of the base. By applying pressure from the center of the foodstuff portion, the foodstuff is pushed to the border of the base, which results in a distribution of the foodstuff over the surface of the base.

In another preferred embodiment of the method according to the invention, the pressure is applied by a roller. Using a roller pressure is easily applied to the flexible layer and the foodstuff underneath, while the roller can be moved over the flexible layer, without damaging the flexible layer. Preferably, the roller comprises a compressible surface. With the compressible layer, the irregularities in the portion of foodstuff can be compensated, while keeping pressure on the flexible layer. Furthermore, a compressible surfaces of the roller ensures that the irregularities are not all push forward in front of the roller.According to the method of the invention the foodstuff is an inhomogeneous mixture. This inhomogeneous mixture could for example be a topping of tomato sauce with chunks of minced meat for a pizza or could be a salad for a sandwich.

Preferably the base is a dough product, like bread or a pizza bottom. The use of the method according to the invention is in particular of advantage for providing a topping onto a dough base.

It is possible to reuse the flexible layer, by cleaning the flexible layer after it is removed from the base with foodstuff. This cleaning could be performed by running the flexible layer through a washing device.

In yet another embodiment of the method according to the invention the flexible layer is a foil. Foil provides a very flexible layer, which easily follows the irregularities in the portion of foodstuff. Foil is furthermore very cost effective, such that it can be disposed of after only a first use of the foil for the method according to the invention.

The invention also relates to a device for providing a layer of foodstuff on a base, the device comprising:
- a conveyor belt for conveying a base;
- dispensing means for arranging a portion of foodstuff on a base;
- application means for applying a flexible layer on top of the portion of foodstuff; and
- means for applying pressure to the flexible layer.

This device according to the invention can easily be integrated in an existing production line. The base is transported by a conveyor belt, while at the same time a portion of foodstuff is dispensed on the base and pressure is applied via a flexible layer to provide an even distribution of the portion of foodstuff over the surface of the base.

In a preferred embodiment of the device according to the invention the means for applying pressure comprise at least one roller which is movable over the surface of the flexible layer.

A roller can be used very effectively in a device according to the invention. The roller can roll over the flexible layer, without damaging the layer, but while providing pressure on the portion of foodstuff.

Preferably, the device comprises a driven axle, which is arranged perpendicular to the surface of the flexible layer, and wherein the at least one roller is arranged radially extending from the axle.

It is furthermore preferred that the roller comprises a compressible surface. The compressible surface can follow the irregularities in the foodstuff better, such that the pressure is evenly applied and an inhomogeneous foodstuff is still evenly distributed.

In yet another embodiment of the device according to the invention the dispensing means comprise a plurality of dispensing heads for evenly distributing a plurality of foodstuff portions over the base. By providing a plurality of portions of foodstuff distributed over the base, spreading of the portions by applying pressure to create an evenly distributed layer of foodstuff is achieved quicker.

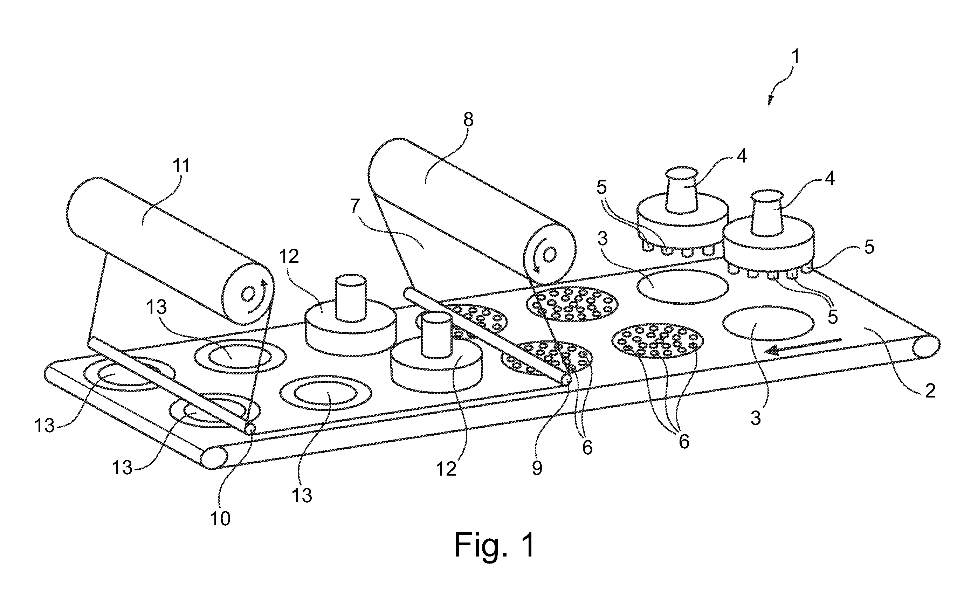

These and other features of the invention will be elucidated in conjunction with the accompanying drawings.Figure 1 shows a schematic perspective view of an embodiment of the device according to the invention.
Figures 2 - 4 show side views of three different steps of the method according to the invention.
Figure 5 shows a schematic perspective view of a second embodiment of the device according to the invention.
Figure 1 shows a device 1. This device 1 has a conveyor belt 2, on which dough bases 3, like pizza bottoms, are transported.

Above the conveyor belt 2, two dispensing nozzles 4 are arranged. Each nozzle 4 has a number of dispensing openings 5, with which portions of foodstuff 6 are arranged on the bases 3.

Next, the bases 3 with the portions of foodstuff 6, evenly distributed over the surface of each base 3, are transported further to have a foil 7 positioned over the bases 3.

This transparent foil 7 is wound off a supply roll 8, along a first guide roll 9 and a second guide roll 10. Then the foil 7 is wound up on a take up roll 11.

Between the first guide roll 9 and the second guide roll 10, the foil 7 is in contact with the foodstuff portions 6 on the bases 3. In this part of the conveyor belt 2, two pressure application devices 12 are arranged over the conveyor belt 2.

The pressure application devices 12 apply pressure to the foil 7, such that the foodstuff portions 6 are dispersed over the surface of a base 3, such that an evenly distributed layer 13 of foodstuff is created on a base 3.

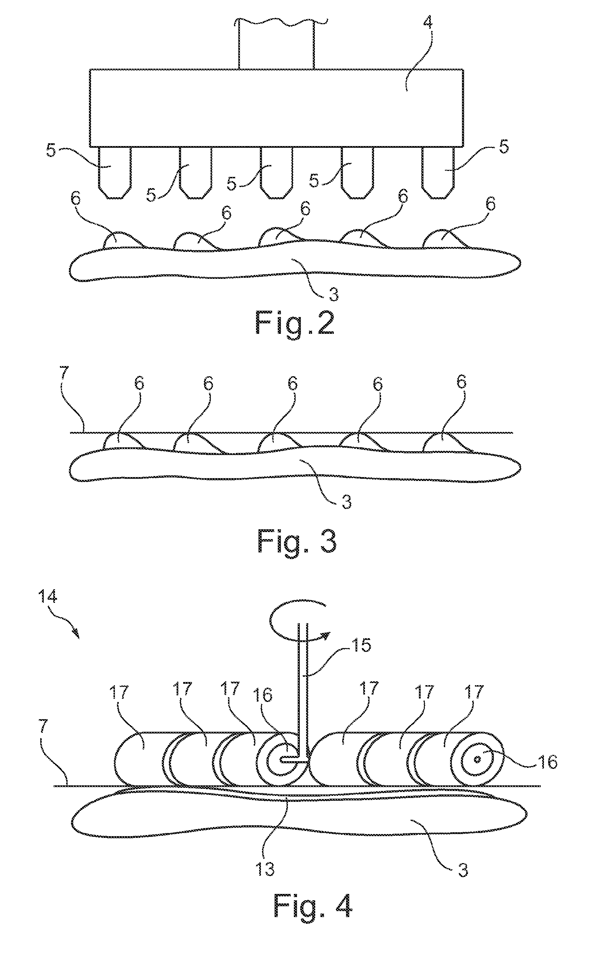

After the pressure is applied by the pressure application devices 12, the foil 7 is removed from the base 3 and the layer 13 of foodstuff by the take up roll 11. If the product does not require a further processing step, like for example heating, it would also be possible to leave the foil and use the foil for packaging of the product.In figure 2, the step of arranging a number of portions 6 of foodstuff is shown in side view. A dispensing nozzle 4 is arranged over the base 3. The dispensing nozzle 4 has a number of dispensing openings 5 from which portions of foodstuff can be dispensed.

Figure 3 shows a side view of the step of arranging a foil 7 over the base 3 and dispensed portions of foodstuff 6. The foil 7 is arranged on top of the portions of foodstuff 6. the foil 7 is preferably a foil which has a low adherence with the foodstuff 6. The foil 7 could be made from HDPE or LDPE.

In figure 4 a pressure application device 14 is arranged on the foil 7 to apply pressure and disperse the portions of foodstuff to form a evenly distributed layer 13 of foodstuff on the base 3.The pressure application device 14 has a driven axle 15, which is arranged perpendicular to the surface of the foil 7. At the end of the axle 15 two rows of rollers 16 are arranged, such that the extend radially from the axle 15. The rollers 16 can rotate independently from each other to account for the differences in rotation speed of the rollers. Each roller 16 is provided with a compressible surface 17. This compressible surface 17 makes sure that irregularities in the foodstuff, like for example chunks of minced meat, are not pushed forward by the rollers 16, but are evenly distributed.

Instead of using rollers 16 on a driven axle 15, it would also be possible to use a rotating brush or use another tool with a compressible surface, which makes either a rotating movement or a linear movement.

Depending on the speed of the conveyor belt 2, it could be preferred to move the dispensing nozzles 4 and pressure application devices 12 along with the conveyor belt 2.

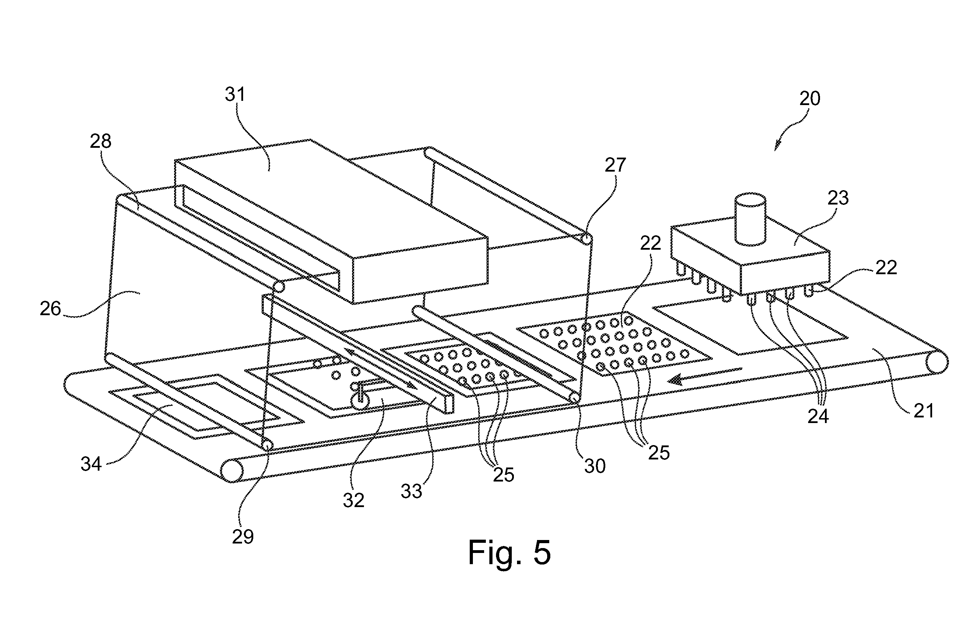

Figure 5 shows a second embodiment of a device 20. This device 20 has also a conveyor belt 21, on which dough bases 22, like pizza bottoms, are transported. In this embodiment the dough bases 22 are square or rectangular.

Above the conveyor belt 21, a dispensing unit 23 with a number of nozzles 24 is arranged. With the nozzles 24 portions of foodstuff 25 are arranged on the bases 22.

Next, the bases 22 with the portions of foodstuff 25, evenly distributed over the surface of each base 22, are transported further to have a foil 26 positioned over the bases 22.

This transparent foil 26 is an endless belt guided along guide rollers 27, 28, 29, 30. The foil 26 is brought into contact with the portions of foodstuff 25 between the guide rollers 29 and 30.

At the top, the foil 26 runs through a washer 31, which cleans the foil 26, such that it can be reused.

The foil 26 is pressed onto the portions of foodstuff 25 and the square dough bases 22, by a roller 32 which is arranged in a guide rail 33 and which is moved up and down along this guide rail 33, transverse to the transport direction of the conveyor belt. This transverse movement combined with the movement of the conveyor belt 21 results in a zigzag movement of the roller 32 over the foil 26, causing an evenly distributed layer 34 of the foodstuff on the base 22.

Although the method and device according to the invention are explained in the figures with pizza bottoms and the application of a topping, it is also possible to use the method and device according to the invention for other purposes, like applying a salad spread to a sandwich, or applying a topping to a cake base for a cream cake.

## Claims

1. Method for providing a layer of foodstuff on a base, which method comprises the steps of:
- providing a base;
- arranging a portion of foodstuff on top of the base;
- arranging a flexible layer over the portion of foodstuff and over the base; and
- applying pressure on the flexible layer to spread the portion of foodstuff over the base.

2. Method according to claim 1, comprising the step of removing the flexible layer after applying the pressure on the layer.

3. Method according to claim 1 or 2, wherein a number of portions of foodstuff is arranged evenly distributed on top of the base.

4. Method according to any of the preceding claims, wherein the pressure is applied from the center of the portion of foodstuff to the border of the base.

5. Method according to any of the preceding, wherein the pressure is applied by a roller.

6. Method according to claim 5, wherein the roller comprises a compressible surface.

7. Method according to any of the preceding claims, wherein the foodstuff is an inhomogeneous mixture.

8. Method according to any of the preceding claims, wherein the base is a dough product, like bread or a pizza bottom.

9. Method according to any of the preceding claims, wherein the flexible layer is a foil.

10. Device for providing a layer of foodstuff on a base, the device comprising:
- a conveyor belt for conveying a base;
- dispensing means for arranging a portion of foodstuff on a base;
- application means for applying a flexible layer on top of the portion of foodstuff; and
- means for applying pressure to the flexible layer.

11. Device according to claim 10, wherein the means for applying pressure comprise at least one roller which is movable over the surface of the flexible layer.

12. Device according to claim 11, comprising a driven axle, which is arranged perpendicular to the surface of the flexible layer, and wherein the at least one roller is arranged radially extending from the axle.

13. Device according to claim 11 or 12, wherein the roller comprises a compressible surface.

14. Device according to any of the claims 10 - 13, wherein the dispensing means comprise a plurality of dispensing heads for evenly distributing a plurality of foodstuff portions over the base.
